(19) Europäisches Patentamt / European Patent Office / Office européen des brevets

(11) **EP 4 725 784 A1**

(12) **EUROPEAN PATENT APPLICATION**

(43) Date of publication:
**15.04.2026 Bulletin 2026/16**

(21) Application number: **24206204.0**

(22) Date of filing: **11.10.2024**

(51) International Patent Classification (IPC):
**B60W 30/16** (2020.01)    **B60W 30/18** (2012.01)
**B60W 50/00** (2006.01)

(52) Cooperative Patent Classification (CPC):
**B60W 30/16; B60W 30/18018;** B60W 2050/0095;
B60W 2554/4042; B60W 2554/802;
B60W 2720/106; B60W 2754/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Volvo Truck Corporation
405 08 Göteborg (SE)**

(72) Inventors:
- **GERDIN, Markus
  449 30 NÖDINGE (SE)**
- **LAINE, Leo
  414 84 GÖTEBORG (SE)**

(74) Representative: **Kransell & Wennborg KB
P.O. Box 2096
403 12 Göteborg (SE)**

(54) **COMPUTER SYSTEM AND METHOD FOR CONTROLLING LONGITUDINAL MOVEMENT OF A VEHICLE**

(57)    A computer system and a method for controlling longitudinal movement of an ego vehicle, such as during travel behind a preceding vehicle, the method comprising:
controlling (301) the longitudinal movement of the ego vehicle according to a first operating mode by sending acceleration requests to a propulsion system and/or a brake system, each acceleration request defining a set acceleration,
determining (302) that a predefined low-speed condition applies,
controlling (303) the longitudinal movement according to a second operating mode in response to the determining of the predefined low-speed condition by sending at least one distance request to the propulsion system and/or the brake system, each distance request defining a set longitudinal distance that the ego vehicle is to move from a current position of the ego vehicle.

EP 4 725 784 A1

Fig. 3

Description

TECHNICAL FIELD

The disclosure relates generally to longitudinal movement control of vehicles. In particular aspects, the disclosure relates to a computer system and a method for controlling longitudinal movement of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

BACKGROUND

A road vehicle may commonly be equipped with a cruise control that assists a driver of the vehicle to keep a desired speed. Many cruise controls may be set to operate in different modes depending on, e.g., the current traffic situation, energy efficiency constraints, and preferences of the driver. For example, an adaptive cruise control mode may be used to adapt the vehicle speed of the vehicle, referred to as the ego vehicle, to another vehicle travelling ahead of the ego vehicle, referred to as a preceding vehicle. The speed of the ego vehicle may be controlled to maintain a desired gap, in terms of time or distance, to the preceding vehicle in a comfortable and energy efficient manner.

In traffic conditions necessitating a low vehicle speed, such as in traffic congestions and similar, it is however difficult to control the longitudinal movement of the ego vehicle such that it maintains the desired gap to the preceding vehicle.

SUMMARY

According to a first aspect of the disclosure, a computer system for controlling longitudinal movement of an ego vehicle is provided. The computer system comprises processing circuitry configured to:

control the longitudinal movement of the ego vehicle according to a first operating mode, in which vehicle speed is controlled by sending at least one acceleration request to at least one of a propulsion system and a brake system of the ego vehicle, each acceleration request defining a set acceleration of the ego vehicle,

determine that a predefined low-speed condition applies,

control the longitudinal movement of the ego vehicle according to a second operating mode in response to the determining of the predefined low-speed condition, wherein, in the second operating mode, the longitudinal movement is controlled by sending at least one distance request to at least one of the propulsion system and the brake system, each distance request defining a set longitudinal distance that the ego vehicle is to move from a current position of the ego vehicle.

The first aspect of the disclosure may seek to provide an in at least some aspect improved computer system for controlling vehicle speed, i.e. longitudinal movement of a vehicle. In particular, it may seek to provide such a computer system which is useful for controlling the longitudinal movement in low-speed conditions, such as in traffic congestions and similar. A technical benefit may include a more precise control of the longitudinal movement at low vehicle speeds thanks to the use of distance requests instead of acceleration requests to control the vehicle speed. Hence, at low vehicle speeds, instead of controlling the propulsion system and/or the brake system by sending positive or negative acceleration requests, the propulsion system and/or the brake system is/are controlled by sending distance requests defining a distance that the ego vehicle should travel from its current position.

Optionally in some examples, including in at least one preferred example, the processing circuitry is further configured to:

receive sensor data relating to at least one of: a current speed of the ego vehicle and a current acceleration of the ego vehicle,
wherein the processing circuitry is configured to determine the at least one acceleration request and the at least one distance request in the first and second operating modes, respectively, based on the received sensor data.

Optionally in some examples, including in at least one preferred example, the processing circuitry is configured to control the longitudinal movement of the ego vehicle when travelling behind a preceding vehicle, and the processing circuitry is further configured to:

in the first operating mode, determine the at least one acceleration request such that the ego vehicle keeps a set distance or a set time gap to the preceding vehicle, and
in the second operating mode, determine the at least one distance request such that the ego vehicle keeps a set distance or a set time gap to the preceding vehicle. The time gap is a temporal space between the ego vehicle and the preceding vehicle. The time gap may, by way of example, be measured from a front of the ego vehicle to a rear-bumper of the preceding vehicle. A technical benefit may include an improved ability to maintain a desired gap, in terms of time or distance, to the preceding vehicle at low-speed conditions.

Optionally in some examples, including in at least one preferred example, the processing circuitry is further configured to:

receive sensor data relating to at least one of: a current speed of the ego vehicle, a current acceleration of the ego vehicle, a current distance to the preceding vehicle, a current speed of the preceding vehicle, and a current acceleration of the preceding vehicle, and

receive information relating to at least one of a desired time gap and a desired distance to the preceding vehicle,

wherein the processing circuitry is configured to determine the at least one acceleration request and the at least one distance request in the first and second operating modes, respectively, based on the received sensor data and information. A technical benefit may include accurate and adaptive control of the ego vehicle's behavior based on real-time data in the first and second operating modes, respectively.

Optionally in some examples, including in at least one preferred example, the processing circuitry is configured to determine that the low-speed condition applies by detecting at least one of: that the ego vehicle travels at a vehicle speed below a threshold speed; that a stop of the ego vehicle at a defined stop position within a predetermined range of the ego vehicle has been requested; that a preceding vehicle travelling ahead of the ego vehicle has come to a stop; that the preceding vehicle travels at a vehicle speed below a threshold speed; and that a distance or time gap between the ego vehicle and the preceding vehicle is below a threshold distance or time gap, respectively. A technical benefit may include reliable detection of the low-speed condition at which the second operating mode would be beneficial.

Optionally in some examples, including in at least one preferred example, the processing circuitry is further configured to detect that a change from the first operating mode to the second operating mode is requested, wherein the processing circuitry is configured to gradually transition from the first operating mode to the second operating mode in response to the detecting of the requested change. A technical benefit may include smoother transitions between operating modes, enhancing riding comfort and reducing wear on a powertrain of the ego vehicle.

Optionally in some examples, including in at least one preferred example, the processing circuitry is configured to gradually transition by determining a difference in vehicle acceleration expected to result from switching to the second operating mode, controlling the vehicle acceleration to gradually reduce the difference, and switching from the first operating mode to the second operating mode once the difference is below a threshold value. A technical benefit may include minimizing abrupt changes in vehicle dynamics, which can improve stability and ride comfort during mode transitions, as well as reduce wear on the powertrain.

Optionally in some examples, including in at least one preferred example, the propulsion system comprises at least one electric machine, and, in the second operating mode, the processing circuitry is configured to control the longitudinal movement by determining an advancement of the electric machine that corresponds to the set longitudinal distance, and controlling the electric machine to rotate based on the determined advancement. A technical benefit may include precise control over vehicle movement in low-speed scenarios, which can lead to more accurate positioning and smoother vehicle operation.

Optionally in some examples, including in at least one preferred example, in the second operating mode, the at least one distance request further defines a target speed of the ego vehicle at the end of the set longitudinal distance. A technical benefit may include improved predictability and control of vehicle behavior, allowing for better integration with surrounding traffic and reducing the likelihood of unexpected maneuvers. The target speed may be zero if the ego vehicle is requested to come to a stop, or non-zero, such as a crawling speed, if the ego vehicle is expected to continue to move forward.

According to a second aspect of the disclosure, a vehicle comprising the computer system is provided. The second aspect of the disclosure may seek to provide an in at least some aspect improved vehicle. A technical benefit may include enhanced overall vehicle control, particularly in low-speed conditions, contributing to improved safety and riding comfort in, e.g., traffic congestions and similar. The vehicle may be a heavy-duty vehicle, such as a bus, a truck, or a construction machine.

Optionally in some examples, including in at least one preferred example, the vehicle further comprises at least one electric machine configured for propulsion of the vehicle. A technical benefit may include precise control over vehicle positioning using distance requests in low-speed conditions.

According to a third aspect of the disclosure, a computer-implemented method for controlling longitudinal movement of an ego vehicle is provided. The method comprises:

controlling, by processing circuitry of a computer system, the longitudinal movement of the ego vehicle according to a first operating mode, in which vehicle speed is controlled by sending at least one acceleration request to at least one of a propulsion system and a brake system of the ego vehicle, each acceleration request defining a set acceleration of the ego vehicle,

determining, by the processing circuitry, that a predefined low-speed condition applies, and

controlling, by the processing circuitry, the longitudinal movement of the ego vehicle according to a second operating mode in response to the determining of the predefined low-speed condition, wherein, in the second operating mode, the longitudinal movement is controlled by sending at least one distance request to at least one of the propulsion system and the brake system, each distance request defining a set longitudinal distance that the ego vehicle is to move from a current position of the ego vehicle.

The third aspect of the disclosure may seek to provide an in at least some aspect improved computer implemented method for controlling the longitudinal movement of a vehicle. In particular, it may seek to provide such a computer system which is useful for controlling the longitudinal movement in low-speed conditions, such as in traffic congestions and similar. A technical benefit may include a more precise control of the longitudinal movement at low vehicle speeds thanks to the use of distance requests instead of acceleration requests to control the vehicle speed.

Optionally in some examples, including in at least one preferred example, the method further comprises:

receiving, by the processing circuitry, sensor data relating to at least one of: a current speed of the ego vehicle and a current acceleration of the ego vehicle, wherein the determining of the at least one acceleration request and the at least one distance request in the first and second operating modes, respectively, is performed based on the received sensor data.

Optionally in some examples, including in at least one preferred example, the ego vehicle is travelling behind a preceding vehicle and the controlling of the longitudinal movement of the ego vehicle comprises:

in the first operating mode, determining the at least one acceleration request such that the ego vehicle keeps a set distance or time gap to the preceding vehicle, and
in the second operating mode, determining the at least one distance request such that the ego vehicle keeps a set distance or time gap to the preceding vehicle.

Optionally in some examples, including in at least one preferred example, the method further comprises:

receiving, by the processing circuitry, sensor data relating to at least one of: a current speed of the ego vehicle, a current acceleration of the ego vehicle, a current distance to the preceding vehicle, a current speed of the preceding vehicle, and a current acceleration of the preceding vehicle, and
receiving, by the processing circuitry, information relating to at least one of a desired time gap and a desired distance to the preceding vehicle,

wherein the determining of the at least one acceleration request and the at least one distance request in the first and second operating modes, respectively, is performed based on the received sensor data and information.

Optionally in some examples, including in at least one preferred example, the determining of that the low-speed condition applies comprises detecting at least one of: that the ego vehicle travels at a vehicle speed below a threshold speed; that a stop of the ego vehicle at a defined stop position within a predetermined range of the ego vehicle has been requested; that a preceding vehicle travelling ahead of the ego vehicle has come to a stop; that the preceding vehicle travels at a vehicle speed below a threshold speed; and that a distance or time gap between the ego vehicle and the preceding vehicle is below a threshold distance or time gap, respectively.

Optionally in some examples, including in at least one preferred example, the method further comprises detecting, by the processing circuitry or by an electronic propulsion control unit or by an electronic brake control unit, that a change from the first operating mode to the second operating mode is requested, and gradually transitioning, by the processing circuitry or by the electronic propulsion control unit or by the electronic brake control unit, from the first operating mode to the second operating mode in response to the detecting of the requested change.

Optionally in some examples, including in at least one preferred example, the gradual transition comprises: determining a difference in vehicle acceleration expected to result from switching to the second operating mode, controlling the vehicle acceleration to gradually reduce the difference, and switching from the first operating mode to the second operating mode once the difference is below a threshold value.

Optionally in some examples, including in at least one preferred example, the propulsion system comprises at least one electric machine, and, in the second operating mode, the controlling of the longitudinal movement comprises determining an advancement of the electric machine that corresponds to the set longitudinal distance, and controlling the electric machine to rotate based on the determined advancement.

Optionally in some examples, including in at least one preferred example, wherein, in the second operating mode, the at least one distance request further defines a target speed of the ego vehicle at the end of the set longitudinal distance. The target speed may be zero or non-zero.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings. The drawings are schematic and not drawn to scale. Like reference numbers refer to like elements throughout the description, unless otherwise indicated.

> **FIG. 1** is an exemplary ego vehicle travelling behind a preceding vehicle.
> **FIG. 2** is an exemplary vehicle according to an example.
> **FIG. 3** is a flowchart illustrating a method according to the disclosure.
> **FIG. 4** is a flowchart illustrating parts of a method according to an example of the disclosure.
> **FIG. 5** is a flowchart illustrating parts of a method according to an example of the disclosure.
> **FIG. 6** is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

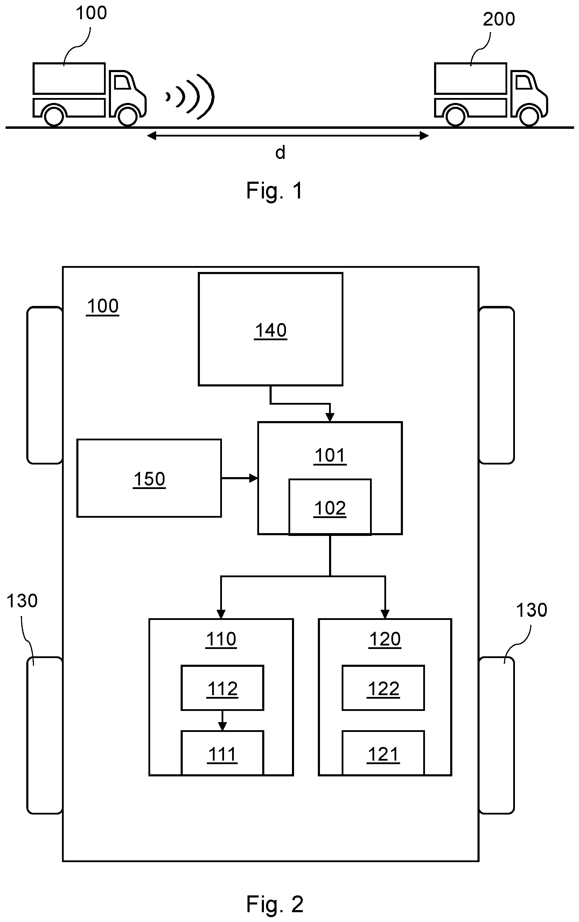

A road vehicle may commonly be equipped with a cruise control that assists a driver of the vehicle to keep a desired speed. Many cruise controls may be set to operate in different modes depending on, e.g., the current traffic situation, energy efficiency constraints, and preferences of the driver. For example, in the situation illustrated in **FIG. 1**, an adaptive cruise control (ACC) mode may be used to adapt the vehicle speed of the vehicle 100, referred to as the ego vehicle, to another vehicle 200 travelling ahead of the ego vehicle 100, referred to as a preceding vehicle. The speed of the ego vehicle 100 may be controlled to maintain a desired gap d, in terms of time or distance, to the preceding vehicle 200 in a comfortable and energy efficient manner.

Current technologies are based on sensors of the ego vehicle 100, such as radar, camera and LIDAR, which report the distance to the preceding vehicle 200 as well as speed and acceleration of the preceding vehicle 200. This information is used in adaptive cruise control implemented in a processing device of the ego vehicle 100, to compute a desired acceleration or deceleration of the ego vehicle 100 to maintain the desired gap d. The computed acceleration or deceleration is transmitted in an acceleration request to a propulsion system and/or a brake system of the ego vehicle 100. The propulsion and brake systems may have internal control loops that aim to keep the requested acceleration or deceleration.

A problem with current solutions is related to longitudinal vehicle control in low speeds, including when the vehicles 100, 200 come to a stop. For example, when the preceding vehicle 200 stops, it is desired that the ego vehicle 100 stops at a defined distance from the target vehicle, for example a few meters. When using acceleration requests to control the ego vehicle 100, the exact defined distance is difficult to achieve due to, e.g., inaccuracies, errors, and/or deficiencies in sensors and actuators in the internal control loops of the propulsion and brake systems. Such factors may cause the ego vehicle 100 to come to a stop earlier or later than at the defined distance.

In traffic conditions necessitating a low vehicle speed, such as in traffic congestions and similar, it may hence be difficult to control the longitudinal movement of the ego vehicle 100 such that it maintains the desired gap d to the preceding vehicle 200. The present disclosure aims at providing methods and means that enable speed control with higher precision at low vehicle speed, without affecting the speed control at cruising speed.

**FIG. 2** is a schematic diagram of an exemplary ego vehicle 100 according to an example. The ego vehicle 100 comprises a propulsion system 110, comprising at least one prime mover 111, and a brake system 120. The at least one prime mover 111 is configured to produce a driving torque which is mechanically transferred to driven wheels 130 of the ego vehicle 100.

The at least one prime mover 111 may preferably comprise an electric machine powered by one or more battery packs, a fuel cell system, etc. In other examples, the at least one prime mover may comprise an internal combustion engine. In some examples, the ego vehicle 100 may be a hybrid vehicle comprising both an electric machine and a combustion engine, wherein the propulsion system 110 may preferably be configured to use the electric machine for propelling the ego vehicle 100 at low vehicle speeds. The propulsion system 110 may comprise an electronic propulsion control unit 112, such as an engine control unit or an electric motor drive, configured to control the prime mover 111.

The brake system 120 comprises one or more brakes 121, such as a service brake and one or more auxiliary brakes, configured to brake the ego vehicle 100. The brake system 120 may further comprise an electronic brake control unit 122 configured to control the brake(s) 121 to apply a braking torque.

The ego vehicle 100 further comprises a sensor system 140 configured to collect sensor data relating to, e.g., speed and acceleration of the ego vehicle 100, distance to a preceding vehicle 200, speed and acceleration of the preceding vehicle 200, etc. The sensor system may, by way of example, comprise vehicle speed and acceleration sensors as well as at least one of a radar, a LIDAR, and a camera for determining the distance to the preceding vehicle 200, and the speed and acceleration of the preceding vehicle 200. The ego vehicle 100 may also comprise an input module 150 via which a driver of the ego vehicle 100 may enter, e.g., a desired set speed of the ego vehicle 100, a desired driving mode, and/or a desired gap d in terms of time or distance to the preceding vehicle 200.

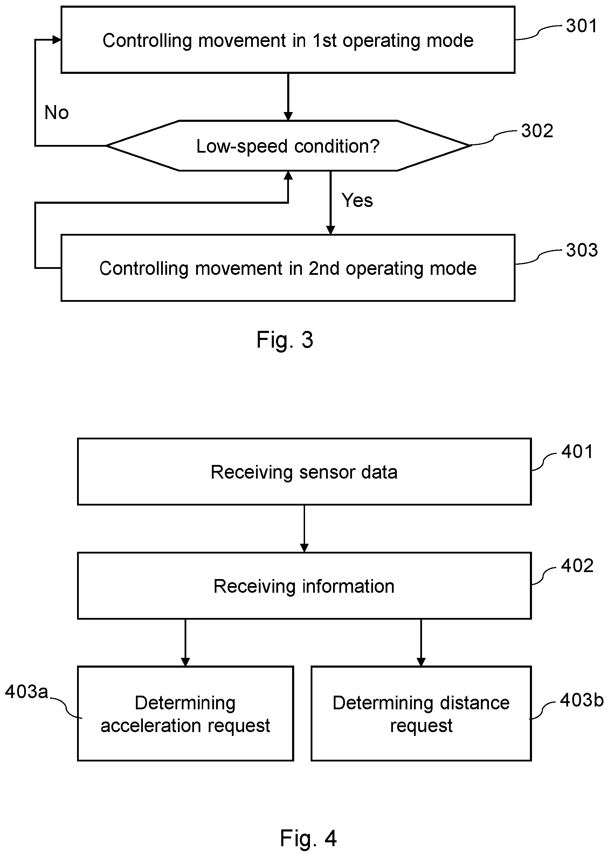

The ego vehicle 100 further comprises a computer system 101 for controlling longitudinal movement of the ego vehicle 100. The computer system 101 comprises a processing device 102 configured to control the longitudinal movement of the ego vehicle 100 by sending requests to the propulsion system 110 and/or to the brake system 120 as will be further explained with reference to **FIGS. 3-5**. The processing device 102 comprises processing circuitry and may, among other functions, implement a cruise controller of the ego vehicle 100. The processing device 102 may be configured to communicate with the electronic propulsion control unit 112 of the propulsion system 110, and/or with the electronic brake control unit 122 of the brake system 120. Hence, the electronic propulsion control unit 112 and the electronic brake control unit 122 may in turn control the prime mover 111 and the brakes 121, respectively, to apply a drive torque or a brake torque in accordance with requests received from the processing device 102.

As illustrated in **FIG. 3**, the processing device 102 is configured to, in a first action 301, control the longitudinal movement of the ego vehicle 100 according to a first operating mode. In the first operating mode, vehicle speed is controlled by sending at least one acceleration request to at least one of the propulsion system 110 and the brake system 120 of the ego vehicle 100. Each acceleration request defines a set acceleration of the ego vehicle 100, either a positive acceleration, zero acceleration, or a negative acceleration, i.e., a deceleration. Hence, the term "acceleration" as used herein also includes decelerations.

The processing device 102 is further configured to, in a second action 302, determine that a predefined low-speed condition applies. In response to the determining that the low-speed condition applies in the second action 302, the processing device 102 is configured to, in a third action 303, control the longitudinal movement of the ego vehicle 100 according to a second operating mode. In the second operating mode, the longitudinal movement is controlled by sending at least one distance request to at least one of the propulsion system 110 and the brake system 120. Each distance request defines a set longitudinal distance that the ego vehicle 100 is to move from a current position of the ego vehicle 100. Hence, whenever the low-speed condition is found to be fulfilled, the processing device 102 switches from acceleration control in the first operating mode to distance control in the second operating mode. This may be applicable both when the ego vehicle 100 travels behind a preceding vehicle 200, and when it does not travel behind any preceding vehicle.

Upon receipt of the acceleration request sent in the action 301, the propulsion system 110 and/or the brake system 120 control(s) the ego vehicle to accelerate or decelerate in accordance with the received acceleration request. Similarly, upon receipt of the distance request, the propulsion system 110 and/or the brake system 120 control(s) the ego vehicle to move the requested distance. For example, when the propulsion system 110 comprises a prime mover 111 in the form of an electric machine, the controlling of the longitudinal movement in the second operating mode, in the action 303, may comprise determining an advancement of the electric machine 111 that corresponds to the set longitudinal distance, and controlling the electric machine 111 to rotate based on the determined advancement. The advancement may be in terms of a number of revolutions of the electric machine 111, and/or in terms of a rotational angle that the electric machine 111 should rotate to advance the vehicle 100 the set longitudinal distance. Conversion between distance and advancement of the electric machine 111 may be realized in the processing device 102, or in the electronic propulsion control unit 112, by taking e.g., wheel diameters and gear ratios into account. The distance request sent to the propulsion system 110 from the processing device 102 may hence be in terms of a longitudinal distance or a rotational advancement of a component of the propulsion system 110, such as of the electric machine 111. In some examples, the distance request may, e.g., define an angular advancement of the driven wheels 130, and/or a number of revolutions of the driven wheels 130, that will result in that the ego vehicle 100 moves the desired longitudinal distance.

When the propulsion system 110 comprises a prime mover 111 in the form an internal combustion engine, the electronic propulsion control unit 112 may use an internal control loop to move the set longitudinal distance as requested in the distance request received from the processing device 102. Feedback signals from e.g., a drive shaft and/or wheel sensors of the ego vehicle 100 may be used in this control loop.

When the ego vehicle 100 travels behind a preceding vehicle 200, the processing device 102 may be configured to, in the first operating mode, determine the at least one acceleration request such that the ego vehicle 100 keeps a set distance or a set time gap to the preceding vehicle 200. In the second operating mode, the processing device 102 may be configured to determine the at least one distance request such that the ego vehicle 100 keeps the set distance or the set time gap to the preceding vehicle 200.

In the second operating mode, the at least one distance request may further define a target speed of the ego vehicle 100 at the end of the set longitudinal distance. The target speed may be zero if the ego vehicle 100 is requested to come to a stop after advancing the set longitudinal distance, or non-zero, such as a crawling speed, if the ego vehicle 100 is expected to continue to move forward. This may be relevant in, e.g., queuing situations in which the preceding vehicle 200 is moving slowly forward. In the first operating mode, the at least one acceleration request may be determined so that the ego vehicle 100 reaches a target speed.

As illustrated in **FIG. 4**, the processing device 102 may be configured to, in an action 401, receive sensor data from the sensor system 140. The sensor data may relate to at least one of: a current speed of the ego vehicle 100, a current acceleration of the ego vehicle 100, a current distance to the preceding vehicle 200, a current speed of the preceding vehicle 200, and a current acceleration of the preceding vehicle 200. The processing device 102 may further be configured to receive, in an action 402, information relating to at least one of a desired time gap and a desired distance to the preceding vehicle 200. Such information may, by way of example, be received from the input module 150. In some examples, the processing device 102 may be configured to determine the set time gap and/or distance based on, e.g., the sensor data received in the action 401. The processing device 102 may further be configured to determine the set time gap and/or distance based on vehicle type of the preceding vehicle 200, and/or based on terrain, such as by using map data and information on vehicle position.

In the first operating mode, the processing device 102 may be configured to, in an action 403a, determine the at least one acceleration request based on the received sensor data and information. In the second operating mode, the processing device 102 may be configured to, in an action 403b, determine the at least one distance request based on the received sensor data and information. In other words, the processing device 102 may, in the first operating mode, determine the acceleration necessary to achieve the set time gap and/or distance, and, in the second operating mode, determine the distance that the ego vehicle 100 is to move from its current position to achieve the set time gap or distance. Preferably, in the second operating mode, the set time gap or distance is defined in terms of distance.

The determining of that the low-speed condition applies in action 302 may comprise detecting at least one of the following: that the ego vehicle 100 travels at a vehicle speed below an ego vehicle threshold speed; that a stop of the ego vehicle 100 at a defined stop position within a predetermined range of the ego vehicle 100 has been requested; that the preceding vehicle 200 has come to a stop; that the preceding vehicle 200 travels at a vehicle speed below a preceding vehicle threshold speed; and that a distance or time gap d between the ego vehicle 100 and the preceding vehicle 200 is below a threshold distance or time gap, respectively. The ego vehicle threshold speed and the preceding vehicle threshold speed may differ from one another, or they may be the same.

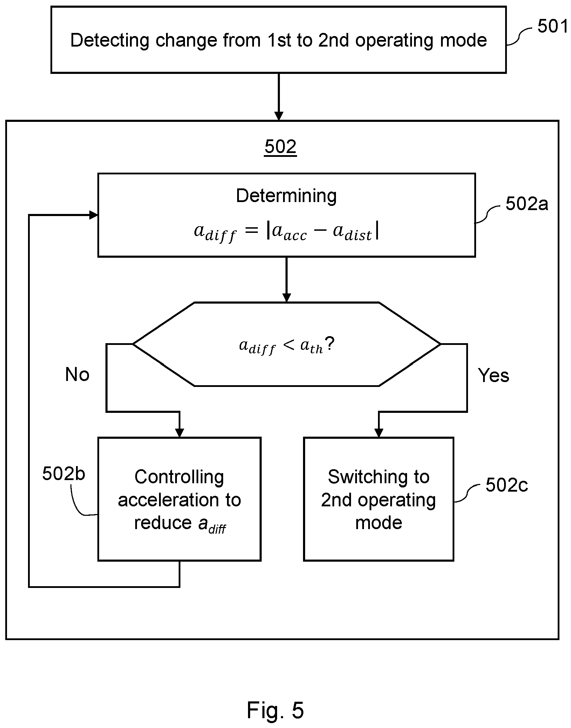

**FIG. 5** illustrates actions for gradually transitioning between the first and second operating modes. The actions illustrated in FIG. 5 may in some examples be performed by the processing device 102 as illustrated in FIG. 2, comprising the cruise controller. In other examples, the actions for gradually transitioning between the first and second operating modes illustrated in FIG. 5 may be performed in the electronic propulsion control unit 112 and/or in the electronic braking control unit 122.

In a first action 501, it is detected that a change from the first operating mode to the second operating mode is requested. In a second action 502, performed in response to the detecting of the requested change in the action 501, a gradual transition from the first operating mode to the second operating mode is effected. This gradual transition may be conducted by a series of actions 502a-502c. In the action 502a, a difference $a_{diff}$ in vehicle acceleration that is expected to result from switching from the first to the second operating mode is determined. The difference $a_{diff}$ is defined as:

$$a_{diff} = |a_{acc} - a_{dist}|$$

wherein $a_{acc}$ is the acceleration resulting from the acceleration request, or the current vehicle acceleration, and $a_{dist}$ is the acceleration resulting from the distance request. The difference $a_{diff}$ is thereafter compared to a threshold $a_{th}$.

In the action 502b, conducted in response to the difference $a_{diff}$ being above the threshold $a_{th}$, the vehicle acceleration is controlled to gradually reduce the difference $a_{diff}$. In the action 502c, conducted in response to the difference $a_{diff}$ being below the threshold $a_{th}$, a switch from the first operating mode to the second operating mode is performed. In this way, large and sudden positive or negative changes in acceleration arising from changing from the first to the second operating mode may be avoided. Such sudden and substantial changes in acceleration may also be referred to as jerk. By avoiding jerk, riding comfort may be increased, and wear may be reduced.

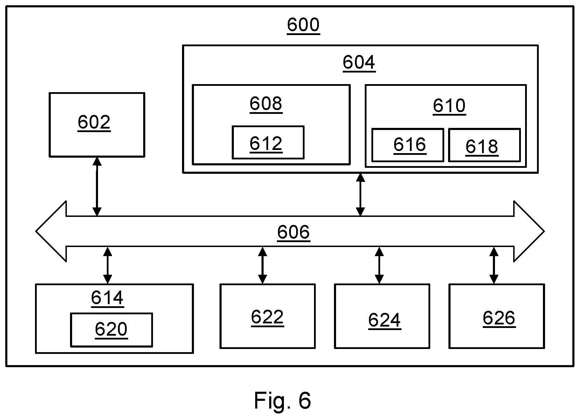

**FIG. 6** is a schematic diagram of a computer system **600**, such as corresponding to the computer system **101** illustrated in **FIG. 1,** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein, such as the processing device **102** illustrated in **FIG. 1** and/or the electronic propulsion control unit **112** and/or the electronic brake control unit **122**. The computer system **600** may include processing circuitry **602** (e.g., processing circuitry including one or more processor devices or control units), a memory **604**, and a system bus **606**. The computer system **600** may include at least one computing device having the processing circuitry **602**. The system bus **606** provides an interface for system components including, but not limited to, the memory **604** and the processing circuitry **602**. The processing circuitry **602** may include any number of hardware components for conducting data or signal processing or for executing computer code stored in memory **604**. The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic devices, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602**. A basic input/output system (BIOS) **612** may be stored in the non-volatile memory **608** and can include the basic routines that help to transfer information between elements within the computer system **600**.

The computer system **600** may further include or be coupled to a non-transitory computer-readable storage medium such as the storage device **614**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610**, which may include an operating system **616** and/or one or more program modules **618**. All or a portion of the examples disclosed herein may be implemented as a computer program **620** stored on a transitory or non-transitory computer-usable or computer-readable storage medium (e.g., single medium or multiple media), such as the storage device **614**, which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602**. In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602**. The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, a list of numbered examples of the disclosure is presented.

**Example 1:** A computer system (101, 600) for controlling longitudinal movement of an ego vehicle (100), the computer system (101, 600) comprising processing circuitry (102, 602) configured to:

control the longitudinal movement of the ego vehicle according to a first operating mode, in which vehicle speed is controlled by sending at least one acceleration request to at least one of a propulsion system (110) and a brake system (120) of the ego vehicle, each acceleration request defining a set acceleration of the ego vehicle, determine that a predefined low-speed condition applies, control the longitudinal movement of the ego vehicle according to a second operating mode in response to the determining of the predefined low-speed condition, wherein, in the second operating mode, the longitudinal movement is controlled by sending at least one distance request to at least one of the propulsion system (110) and the brake system (120), each distance request defining a set longitudinal distance that the ego vehicle (100) is to move from a current position of the ego vehicle (100).

**Example 2**: The computer system of Example 1, wherein the processing circuitry (102, 602) is configured to control the longitudinal movement of the ego vehicle (100) when travelling behind a preceding vehicle (200), the processing circuitry (102, 602) being configured to:

in the first operating mode, determine the at least one acceleration request such that the ego vehicle (100) keeps a set distance or a set time gap to the preceding vehicle (200), and in the second operating mode, determine the at least one distance request such that the ego vehicle (100) keeps a set distance or a set time gap to the preceding vehicle (200).

**Example 3:** The computer system of Example 2, wherein the processing circuitry (102, 602) is further configured to:

receive sensor data relating to at least one of: a current speed of the ego vehicle (100), a current acceleration of the ego vehicle (100), a current distance to the preceding vehicle (200), a current speed of the preceding vehicle (200), and a current acceleration of the preceding vehicle (200), and receive information relating to at least one of a desired time gap and a desired distance to the preceding vehicle (200),

wherein the processing circuitry (102, 602) is configured to determine the at least one acceleration request and the at least one distance request in the first and second operating modes, respectively, based on the received sensor data and information.

**Example 4:** The computer system of any one of the preceding examples, wherein the processing circuitry (102, 602) is configured to determine that the low-speed condition applies by detecting at least one of: that the ego vehicle (100) travels at a vehicle speed below a threshold speed; that a stop of the ego vehicle (100) at a defined stop position within a predetermined range of the ego vehicle (100) has been requested; that a preceding vehicle (200) travelling ahead of the ego vehicle (100) has come to a stop; that the preceding vehicle (200) travels at a vehicle speed below a threshold speed; and that a distance or time gap between the ego vehicle (100) and the preceding vehicle (200) is below a threshold distance or time gap, respectively.

**Example 5:** The computer system of any one of the preceding examples, wherein the processing circuitry (102, 602) is further configured to:

detect that a change from the first operating mode to the second operating mode is requested, gradually transition from the first operating mode to the second operating mode in response to the detecting of the requested change.

**Example 6:** The computer system of Example 5, wherein the processing circuitry (102, 602) is configured to perform the gradual transition by:

determining a difference ($a_{diff}$) in vehicle acceleration expected to result from switching to the second operating mode,
controlling the vehicle acceleration to gradually reduce the difference ($a_{diff}$), and
switching from the first operating mode to the second operating mode once the difference ($a_{diff}$) is below a threshold value ($a_{th}$).

**Example 7:** The computer system of any one of the preceding examples, wherein the propulsion system (110) comprises at least one electric machine (111), and wherein, in the second operating mode, the processing circuitry (102, 602) is configured to control the longitudinal movement by:

determining an advancement of the electric machine (111) that corresponds to the set longitudinal distance,
controlling the electric machine (111) to rotate based on the determined advancement.

**Example 8:** The computer system of any one of the preceding examples, wherein, in the second operating mode, the at least one distance request further defines a target speed of the ego vehicle (100) at the end of the set longitudinal distance.

**Example 9:** A vehicle (100) comprising the computer system (101, 600) of any of the preceding examples.

**Example 10:** The vehicle of Example 9, further comprising at least one electric machine (111) configured for propulsion of the vehicle (100).

**Example 11:** A computer-implemented method for controlling longitudinal movement of an ego vehicle (100), the method comprising:

controlling (301), by processing circuitry (102, 602) of a computer system (101, 600), the longitudinal movement of the ego vehicle (100) according to a first operating mode, in which vehicle speed is controlled by sending at least one acceleration request to at least one of a propulsion system (110) and a brake system (120) of the ego vehicle (100), each acceleration request defining a set acceleration of the ego vehicle (100),
determining (302), by the processing circuitry (102, 602), that a predefined low-speed condition applies,
controlling (303), by the processing circuitry (102, 602), the longitudinal movement of the ego vehicle (100) according to a second operating mode in response to the determining (302) of the predefined low-speed condition, wherein, in the second operating mode, the longitudinal movement is controlled by sending at least one distance request to at least one of the propulsion system (110) and the brake system (120), each distance request defining a set longitudinal distance that the ego vehicle (100) is to move from a current position of the ego vehicle (100).

**Example 12:** The method of Example 11, wherein the ego vehicle (100) is travelling behind a preceding vehicle (200), and wherein the controlling of the longitudinal movement of the ego vehicle (100) comprises:

in the first operating mode, determining (403a) the at least one acceleration request such that the ego vehicle (100) keeps a set distance or a set time gap to the preceding vehicle (200), and
in the second operating mode, determining (403b) the at least one distance request such that the ego vehicle (100) keeps a set distance or a set time gap to the preceding vehicle (200).

**Example 13:** The method of Example 12, further comprising:

receiving (401), by the processing circuitry (102, 602), sensor data relating to at least one of: a current speed of the ego vehicle (100), a current acceleration of the ego vehicle (100), a current distance to the preceding vehicle (200), a current speed of the preceding vehicle (200), and a current acceleration of the preceding vehicle (200), and
receiving (402), by the processing circuitry (102, 602), information relating to at least one of a desired time gap and a desired distance to the preceding vehicle (200),

wherein the determining (403a, 403b) of the at least one acceleration request and the at least one distance request in the first and second operating modes, respectively, is performed based on the received sensor data and information.

**Example 14:** The method of any one of Examples 11-13, wherein the determining (302) of that the low-speed condition applies comprises detecting at least one of: that the ego vehicle (100) travels at a vehicle speed below a threshold speed; that a stop of the ego vehicle (100) at a defined stop position within a predetermined range of the ego vehicle (100) has been requested; that a preceding vehicle (200) travelling ahead of the ego vehicle (100) has come to a stop; that the preceding vehicle (200) travels at a vehicle speed below a threshold speed; and that a distance or time gap between the ego vehicle (100) and the preceding vehicle (200) is below a threshold distance or time gap, respectively.

**Example 15:** The method of any one of Examples 11-14, further comprising:

detecting (501), by the processing circuitry (102, 602) or by an electronic propulsion control unit (112) or by an electronic brake control unit (122), that a change from the first operating mode to the second operating mode is requested,

gradually transitioning (502), by the processing circuitry (102, 602) or by the electronic propulsion control unit (112) or by the electronic brake control unit (122), from the first operating mode to the second operating mode in response to the detecting (501) of the requested change.

**Example 16:** The method of Example 15, wherein the gradual transition comprises:

determining (502a) a difference ($a_{diff}$) in vehicle acceleration expected to result from switching to the second operating mode,

controlling (502b) the vehicle acceleration to gradually reduce the difference ($a_{diff}$), and

switching (502c) from the first operating mode to the second operating mode once the difference ($a_{diff}$) is below a threshold value ($a_{th}$).

**Example 17:** The method of any one of the preceding examples, wherein the propulsion system (110) comprises at least one electric machine (111), and wherein, in the second operating mode, the controlling (301) of the longitudinal movement comprises:

determining an advancement of the electric machine (111) that corresponds to the set longitudinal distance,

controlling the electric machine (111) to rotate based on the determined advancement.

**Example 18:** The method of any one of the preceding examples, wherein, in the second operating mode, the at least one distance request further defines a target speed of the ego vehicle (100) at the end of the set longitudinal distance.

**Example 19:** A computer program product (614) comprising program code (620) for performing, when executed by the processing circuitry (102, 602), the method of any of Examples 11-18.

**Example 20:** A non-transitory computer-readable storage medium (614) comprising instructions, which when executed by the processing circuitry (102, 602), cause the processing circuitry (102, 602) to perform the method of any of Examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (101, 600) for controlling longitudinal movement of an ego vehicle (100), the computer system (101, 600) comprising processing circuitry (102, 602) configured to:

control the longitudinal movement of the ego vehicle (100) according to a first operating mode, in which vehicle speed is controlled by sending at least one acceleration request to at least one of a propulsion system (110) and a brake system (120) of the ego vehicle (100), each acceleration request defining a set acceleration of the ego vehicle (100),

determine that a predefined low-speed condition applies,

control the longitudinal movement of the ego vehicle (100) according to a second operating mode in response to the determining of the predefined low-speed condition, wherein, in the second operating mode, the longitudinal movement is controlled by sending at least one distance request to at least one of the propulsion system (110) and the brake system (120), each distance request defining a set longitudinal distance that the ego vehicle (100) is to move from a current position of the ego vehicle (100).

2. The computer system of claim 1, wherein the processing circuitry (102, 602) is configured to control the longitudinal movement of the ego vehicle (100) when travelling behind a preceding vehicle (200), the processing circuitry (102, 602) being configured to:

in the first operating mode, determine the at least one acceleration request such that the ego vehicle (100) keeps a set distance or a set time gap to the preceding vehicle (200), and in the second operating mode, determine the at least one distance request such that the ego vehicle (100) keeps a set distance or a set time gap to the preceding vehicle (200).

3. The computer system of claim 2, wherein the processing circuitry (102, 602) is further configured to:

receive sensor data relating to at least one of: a current speed of the ego vehicle (100), a current acceleration of the ego vehicle (100), a current distance to the preceding vehicle (200), a current speed of the preceding vehicle (200), and a current acceleration of the preceding vehicle (200), and

receive information relating to at least one of a desired time gap and a desired distance to the preceding vehicle (200),

wherein the processing circuitry (102, 602) is configured to determine the at least one acceleration request and the at least one distance request in the first and second operating modes, respectively, based on the received sensor data and information.

4. The computer system of any one of the preceding claims, wherein the processing circuitry (102, 602) is configured to determine that the low-speed condition applies by detecting at least one of: that the ego vehicle (100) travels at a vehicle speed below a threshold speed; that a stop of the ego vehicle (100) at a defined stop position within a predetermined range of the ego vehicle (100) has been requested; that a preceding vehicle (200) travelling ahead of the ego vehicle (100) has come to a stop; that the preceding vehicle (200) travels at a vehicle speed below a threshold speed; and that a distance or time gap between the ego vehicle (100) and the preceding vehicle (200) is below a threshold distance or time gap, respectively.

5. The computer system of any one of the preceding claims, wherein the processing circuitry (102, 602) is further configured to:

detect that a change from the first operating mode to the second operating mode is requested,

gradually transition from the first operating mode to the second operating mode in response to the detecting of the requested change.

6. The computer system of claim 5, wherein the processing circuitry (102, 602) is configured to perform the gradual transition by:

determining a difference ($a_{diff}$) in vehicle acceleration expected to result from switching to the second operating mode,

controlling the vehicle acceleration to gradually reduce the difference ($a_{diff}$), and

switching from the first operating mode to the second operating mode once the difference ($a_{diff}$) is below a threshold value ($a_{th}$).

7. The computer system of any one of the preceding claims, wherein the propulsion system (110) comprises at least one electric machine (111), and wherein, in the second operating mode, the processing circuitry (102, 602) is configured to control the longitudinal movement by:

determining an advancement of the electric machine (111) that corresponds to the set longitudinal distance,

controlling the electric machine (111) to rotate based on the determined advancement.

8. The computer system of any one of the preceding claims, wherein, in the second operating mode, the at least one distance request further defines a target speed of the ego vehicle (100) at the end of the set longitudinal distance.

9. A vehicle (100) comprising the computer system (101, 600) of any of the preceding claims.

10. The vehicle of claim 9, further comprising at least one electric machine (111) configured for propulsion of the vehicle (100).

11. A computer-implemented method for controlling longitudinal movement of an ego vehicle (100), the method comprising:

controlling (301), by processing circuitry (102, 602) of a computer system (101, 600), the longitudinal movement of the ego vehicle (100) according to a first operating mode, in which vehicle speed is controlled by sending at least one acceleration request to at least one of a propulsion system (110) and a brake system (120) of the ego vehicle (100), each acceleration request defining a set acceleration of the ego vehicle (100),

determining (302), by the processing circuitry (102, 602), that a predefined low-speed condition applies,

controlling (303), by the processing circuitry (102, 602), the longitudinal movement of the ego vehicle (100) according to a second operating mode in response to the determining (302) of the predefined low-speed condition, wherein, in the second operating mode, the longitudinal movement is controlled by sending at least one distance request to at least one of the propulsion system (110) and the brake system (120), each distance request defining a set longitudinal distance that the ego vehicle (100) is to move from a current position of the ego vehicle (100).

12. The method of claim 11, wherein the ego vehicle (100) is travelling behind a preceding vehicle (200), and wherein the controlling of the longitudinal movement of the ego vehicle (100) comprises:

in the first operating mode, determining (403a) the at least one acceleration request such that the ego vehicle (100) keeps a set distance or a set time gap to the preceding vehicle (200), and in the second operating mode, determining (403b) the at least one distance request such that the ego vehicle (100) keeps a set distance or a set time gap to the preceding vehicle (200).

13. The method of claim 12, further comprising:

receiving (401), by the processing circuitry (102, 602), sensor data relating to at least one of: a current speed of the ego vehicle (100), a current acceleration of the ego vehicle (100), a current distance to the preceding vehicle (200), a current speed of the preceding vehicle (200), and a current acceleration of the preceding vehicle (200), and

receiving (402), by the processing circuitry (102, 602), information relating to at least one of a desired time gap and a desired distance to the preceding vehicle (200),

wherein the determining (403a, 403b) of the at least one acceleration request and the at least one distance request in the first and second operating modes, respectively, is performed based on the received sensor data and information.

14. A computer program product (614) comprising program code (620) for performing, when executed by the processing circuitry (102, 602), the method of any of claims 11-13.

15. A non-transitory computer-readable storage medium (614) comprising instructions, which when executed by the processing circuitry (102, 602), cause the processing circuitry (102, 602) to perform the method of any of claims 11-13.

Fig. 1

Fig. 2

Fig. 3

Fig. 4

```
┌──────────────────────────────────────────────────────┐
│   Detecting change from 1st to 2nd operating mode     │──⌐ 501
└──────────────────────────────────────────────────────┘
                            │
                            ▼
┌────────────────────────────────────────────────────────────────┐
│                            502                                  │
│                                                                 │
│       ┌──────────────────────────────────────────┐             │
│  ┌───▶│              Determining                   │──⌐ 502a    │
│  │    │        a_diff = |a_acc − a_dist|           │            │
│  │    └──────────────────────────────────────────┘             │
│  │                        │                                     │
│  │                        ▼                                     │
│  │              ╱────────────────────╲                         │
│  │             ╱   a_diff < a_th ?     ╲                        │
│  │   No        ╲                       ╱        Yes             │
│  │              ╲────────────────────╱                         │
│  │         │                              │                     │
│  │         ▼                              ▼                     │
│  │   ┌───────────┐                  ┌───────────┐              │
│  │502b│Controlling│                 │ Switching  │──⌐ 502c      │
│  │   │acceleration│                 │ to 2nd     │              │
│  │   │to reduce   │                 │ operating  │              │
│  │   │a_diff      │                 │ mode       │              │
│  └───┤           │                  └───────────┘              │
│      └───────────┘                                             │
└────────────────────────────────────────────────────────────────┘
```

$$a_{diff} = |a_{acc} - a_{dist}|$$

$$a_{diff} < a_{th}?$$

Fig. 5

Fig. 6

Europäisches
Patentamt
European
Patent Office
Office européen
des brevets

# EUROPEAN SEARCH REPORT

**Application Number**

EP 24 20 6204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/072955 A1 (EDIGER ANDREAS [DE] ET AL) 16 March 2017 (2017-03-16) * paragraphs [0003], [0008] - [0009]; figures 1,2 * | 1-15 | INV. B60W30/16 B60W30/18 B60W50/00 |
| A | US 2011/257862 A1 (LEE CHAN KYU [KR] ET AL) 20 October 2011 (2011-10-20) * paragraphs [0012], [0013], [0029]; figures 3,5 * | 1-15 | |
| A | US 2012/191318 A1 (HOLZMANN MANFRED [DE] ET AL) 26 July 2012 (2012-07-26) * paragraphs [0006], [0011], [0013], [0017], [0018]; figure 4 * | 1-15 | |

**TECHNICAL FIELDS SEARCHED (IPC)**

B60W

The present search report has been drawn up for all claims

| Place of search | Date of completion of the search | Examiner |
|---|---|---|
| Munich | 25 March 2025 | Bak, Maciej |

EPO FORM 1503 03.82 (P04C01)

## ANNEX TO THE EUROPEAN SEARCH REPORT
## ON EUROPEAN PATENT APPLICATION NO.

EP 24 20 6204

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2025

| Patent document cited in search report | Publication date | Patent family member(s) | Publication date |
|---|---|---|---|
| US 2017072955 A1 | 16-03-2017 | CN 106515734 A | 22-03-2017 |
| | | DE 102016217677 A1 | 16-03-2017 |
| | | EP 3144197 A1 | 22-03-2017 |
| | | US 2017072955 A1 | 16-03-2017 |
| US 2011257862 A1 | 20-10-2011 | CN 102219019 A | 19-10-2011 |
| | | JP 2011219077 A | 04-11-2011 |
| | | KR 20110114986 A | 20-10-2011 |
| | | US 2011257862 A1 | 20-10-2011 |
| US 2012191318 A1 | 26-07-2012 | CN 102616237 A | 01-08-2012 |
| | | DE 102011009483 A1 | 26-07-2012 |
| | | EP 2481650 A1 | 01-08-2012 |
| | | US 2012191318 A1 | 26-07-2012 |

EPO FORM P0459

For more details about this annex : see Official Journal of the European Patent Office, No. 12/82